# FASCICULE DE BREVET EUROPEEN

(11) **EP 4 363 315 B1**
(45) Date de publication et mention de la délivrance du brevet: **29.10.2025**
(21) Numéro de dépôt: 22734986.7
(22) Date de dépôt: 24.06.2022
(51) Int. Cl.: B64C 25/14, B64C 25/20

(54) **ATTERRISSEUR D'AERONEF EQUIPE D'UN DISPOSITIF DE VERROUILLAGE A RESSORT A LAME**
FLUGZEUGFAHRWERK MIT EINER BLATTFEDERVERRIEGELUNGSVORRICHTUNG
AIRCRAFT LANDING GEAR PROVIDED WITH A LEAF SPRING LOCKING DEVICE

(30) Priorité: 28.06.2021 FR 2106886
(43) Date de publication de la demande: 08.05.2024
(73) Titulaire: Safran Landing Systems, 78140 Vélizy-Villacoublay (FR)
(72) Inventeur: NGUYEN, Nicolas, 77550 MOISSY-CRAMAYEL (FR); BLANPAIN, Thierry, 77550 MOISSY-CRAMAYEL (FR); EUZET, Bertrand, 77550 MOISSY-CRAMAYEL (FR)
(74) Mandataire: Cabinet Boettcher
(86) Numéro de dépôt international: PCT/EP2022/067445
(87) Numéro de publication internationale: WO 2023/274896

(56) Documents cités:
- EP-A1- 3 495 263
- EP-A1- 3 875 367
- WO-A2-2009/109771
- US-A1- 2015 203 192
- US-B2- 9 862 483

## Description

La présente invention concerne le domaine des trains d'atterrissage et plus particulièrement les moyens permettant de verrouiller l'atterrisseur en position déployée.

### ARRIERE PLAN DE L'INVENTION

On connaît des atterrisseurs d'aéronef comprenant une jambe montée mobile sur la structure d'un aéronef entre une position déployée (pour le décollage et l'atterrissage) et une position rétractée (pour le vol) sous l'action d'un actionneur de manœuvre.

La jambe est maintenue dans la position déployée par une contrefiche briseuse qui est attelée à la jambe et à la structure de l'aéronef, et qui comporte deux bielles articulées entre elles et maintenues en position alignée par un organe de stabilisation.

L'organe de stabilisation comprend deux biellettes articulées entre elles et maintenues en position sensiblement alignée par un organe de verrouillage passif afin d'empêcher le désalignement de la contrefiche.

En général, l'organe de verrouillage comporte un ou plusieurs ressorts hélicoïdaux ayant des extrémités reliées à la contrefiche et à l'organe de stabilisation pour exercer un effort de traction sur ledit organe de stabilisation et ainsi empêcher le désalignement des biellettes.

Il est courant que l'atterrisseur soit agencé pour se déplacer par gravité de la position rétractée vers la position déployée en cas de défaillance de l'actionneur de manœuvre. Les ressorts hélicoïdaux sont généralement prévus pour aider le déplacement de l'atterrisseur vers la position déployée et à le verrouiller dans cette position.

Cela étant, les ressorts hélicoïdaux sont particulièrement encombrants et s'opposent à l'action de l'actionneur de manœuvre lors du relevage de l'atterrisseur, leur comportement linéaire impliquant des efforts supplémentaires importants à contrer lors du déplacement de l'atterrisseur vers la position rétractée pour lesquels l'actionneur de manœuvre doit être dimensionné.

Qui plus est, les ressorts hélicoïdaux ont une raideur radiale limitée et s'avèrent particulièrement vulnérables aux impacts d'oiseau et autres débris générés par exemple lors de l'éclatement d'un pneumatique. Ils peuvent également subir une rupture en fatigue due aux vibrations conférées par le fonctionnement du train d'atterrissage ou des effets aérodynamiques, et venir interférer avec des pièces à proximité. US9862483B2 divulgue un train d'atterrissage d'avion qui comprend un ressort à lames en fibres composites disposé comme un ressort de verrouillage vers le bas pour réaliser la liaison de verrouillage.

### OBJET DE L'INVENTION

L'invention a donc pour but de proposer un atterrisseur d'aéronef obviant au moins en partie aux inconvénients précités.

### RESUME DE L'INVENTION

A cet effet, on propose un atterrisseur d'aéronef comprenant :
- une jambe agencée pour être montée mobile sur une structure d'aéronef entre une position déployée et une position rétractée ;
- au moins un organe de contreventement pour maintenir la jambe dans la position déployée, comportant une première bielle articulée sur la structure d'aéronef et une deuxième bielle articulée sur la première bielle et sur la jambe ;
- un organe de stabilisation pour maintenir les première et deuxième bielles en position alignée, comportant une première biellette et une deuxième biellette articulées entre elles, et dont la deuxième biellette est articulée sur la première bielle ; et
- au moins un ressort pour rappeler élastiquement en position généralement alignée les articulations des première et deuxième biellettes.

Selon l'invention, le ressort est un ressort à lame agencé pour être amené vers un état élastiquement déformé sous un effort de flexion lorsque les articulations des première et deuxième biellettes quittent leur position généralement alignée, et pour échapper à l'effort de flexion et être dans un état de moindre déformation lorsque la jambe est entre la position rétractée et une position intermédiaire comprise entre la position rétractée et la position déployée.

Ainsi, l'effort de flexion auquel est soumis le ressort ne s'oppose que temporairement au relevage de la jambe 2, ce qui permet de limiter les efforts à contrer lors du déplacement de l'atterrisseur vers la position rétractée pour lesquels un actionneur de manœuvre doit être dimensionné.

Par ailleurs, les ressorts à lame s'avèrent bien moins vulnérables aux impacts d'oiseaux et débris générés par l'éclatement d'un pneu que les ressorts hélicoïdaux. Ils présentent également un encombrement moindre, ce qui facilite leur intégration.

Selon un mode de réalisation particulier de l'invention, le ressort à lame a une extrémité fixée rigidement à la première bielle, et une extrémité opposée en appui permanent sur un premier bras d'un basculeur monté libre en rotation autour de l'axe d'articulation de la première bielle et de la deuxième biellette. Le basculeur est lié en rotation à la première bielle lorsque la jambe est entre la position rétractée et la position intermédiaire, et lié en rotation à la deuxième biellette lorsque la jambe est entre la position intermédiaire et la position déployée.

De manière particulière, le basculeur a un deuxième bras en appui contre une surface de la première bielle lorsque la jambe est entre la position rétractée et la position intermédiaire, et en appui contre une surface de la deuxième biellette lorsque la jambe est entre la position intermédiaire et la position déployée.

Selon une caractéristique particulière, le ressort à lame est une plaque de métal ayant une épaisseur sensiblement constante et une largeur évoluant de manière globalement linéaire.

De manière particulière, l'extrémité du ressort à lame est fixée rigidement à la première bielle via un dispositif de fixation comprenant une semelle fixée sur la première bielle et un support de lame fixé à l'extrémité du ressort à lame. Le support de fixation comporte en partie avant une surface de contact agencée pour coopérer avec une surface de contact de la semelle et permettre un pivotement dudit support de lame sur ladite semelle autour d'un axe sensiblement perpendiculaire à un axe longitudinal du ressort à lame, et comporte en partie arrière un trou oblong agencé pour être traversé par une vis afin de fixer rigidement le support de lame à la première bielle et permettre le pivotement dudit support de lame lors du vissage et dévissage de la vis.

De manière particulière, le volume occupé par le ressort à lame et le basculeur lorsque la jambe est en position déployée est contenu dans le volume balayé par la première bielle lorsque la jambe passe de la position rétractée à la position déployée.

Selon un autre mode de réalisation particulier de l'invention, le ressort à lame a une extrémité fixée rigidement à la deuxième biellette, et une extrémité opposée en appui permanent contre un profil de glissement d'une came montée libre en rotation autour de l'axe d'articulation de la première bielle et de la deuxième biellette. La came est liée en rotation à la deuxième biellette lorsque la jambe est entre la position rétractée et la position intermédiaire, et liée en rotation à la première bielle lorsque la jambe est entre la position intermédiaire et la position déployée.

De manière particulière, la came a une surface d'entraînement en rotation en appui contre une surface de la première bielle lorsque la jambe est entre la position intermédiaire et la position déployée, et en appui contre une surface de la deuxième biellette lorsque la jambe est entre la position rétractée et la position intermédiaire.

Selon une caractéristique particulière, le ressort à lame comporte une pluralité de lames superposées ayant une largeur globalement constante et des longueurs différentes.

De manière particulière, l'atterrisseur comprend deux ressorts à lame pour fournir une redondance en cas de défaillance de l'un des deux ressorts à lame.

De manière particulière, les deux ressorts à lames sont sensiblement identiques.

L'invention concerne également un aéronef comprenant au moins un tel atterrisseur.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig. 1] la figure 1 est une vue de côté d'un atterrisseur d'aéronef selon un premier mode de réalisation de l'invention, représenté en position rétractée ;
[Fig. 2] la figure 2 est une vue analogue à la figure 1 montrant l'atterrisseur dans une première position intermédiaire au début de la phase de déploiement ;
[Fig. 3] la figure 3 est une vue analogue à la figure 1 montrant l'atterrisseur dans une deuxième position intermédiaire à la fin de la phase de déploiement ;
[Fig. 4] la figure 4 est une vue analogue à la figure 1 montrant l'atterrisseur en position déployée ;
[Fig. 5] la figure 5 est une vue en perspective d'une partie de l'atterrisseur illustré à la figure 4 ;
[Fig. 6] la figure 6 est une vue en perspective d'un dispositif de fixation du ressort à lame sur l'organe de contreventement ;
[Fig. 7] la figure 7 est une vue de côté d'une partie d'un atterrisseur d'aéronef selon un deuxième mode de réalisation de l'invention, représenté en position déployée.

### DESCRIPTION DETAILLEE DE L'INVENTION

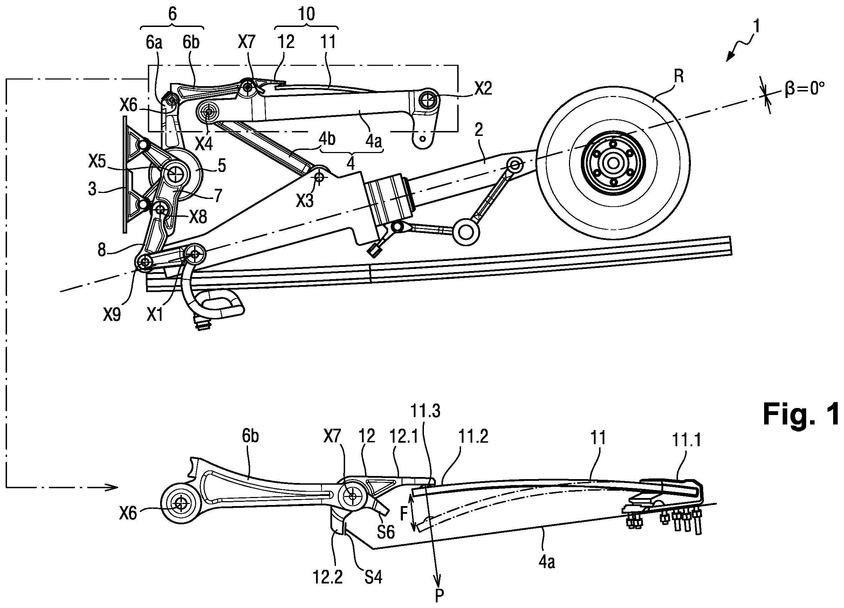

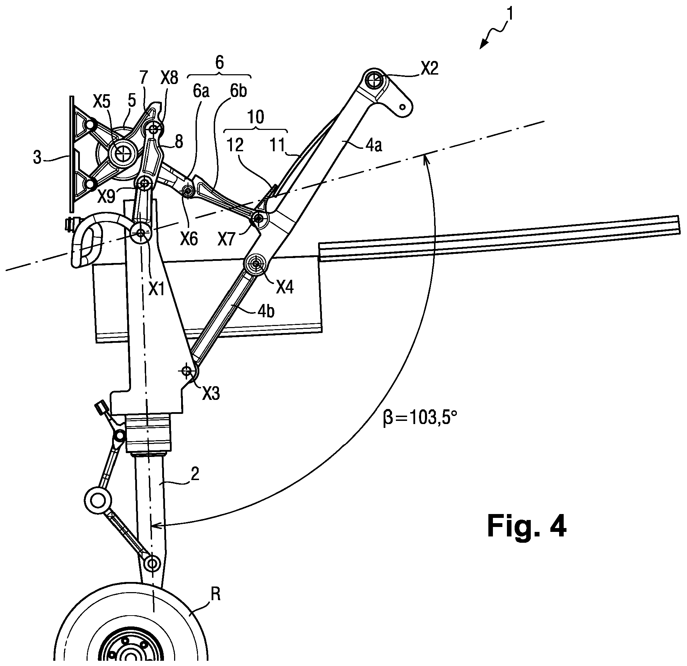

En référence aux figures 1 à 4, un atterrisseur 1 d'aéronef comprend de façon connue en soi une jambe 2 ayant une première extrémité portant des roues R et, à l'opposé, une deuxième extrémité articulée sur une structure 3 d'un aéronef selon un axe d'articulation X1 sensiblement horizontal en service. La jambe 2 est mobile entre une position rétractée illustrée à la figure 1 et une position déployée illustrée à la figure 4. La jambe 2 est maintenue en position déployée au moyen d'un organe de contreventement 4 comportant une première bielle 4a articulée sur la structure 3 de l'aéronef selon un axe X2 d'articulation et une deuxième bielle 4b articulée sur la jambe 2 et sur la première bielle 4a selon des axes X3 et X4 d'articulation respectifs. Dans la position déployée, la première bielle 4a et la deuxième bielle 4b sont en position sensiblement alignée.

Un actionneur 5 rotatif est monté à libre rotation sur la structure 3 de l'aéronef selon un axe de rotation X5 parallèle aux axes X1-X4 d'articulation. L'actionneur 5 comporte un carter muni d'un appendice formant une première biellette 6a, et comporte un arbre monté tournant selon l'axe X5 de rotation et portant une manivelle 7. La position angulaire relative entre la première biellette 6a et la manivelle 7 peut être modifiée en alimentant l'actionneur 5 pour faire tourner l'arbre relativement au carter. La première biellette 6a est attelée à la première bielle 4a de l'organe de contreventement 4 au moyen d'une deuxième biellette 6b articulée sur la première biellette 6a selon un axe X6 d'articulation et articulée sur la première bielle 4a selon un axe X7 d'articulation. La manivelle 7 est attelée à la jambe 2 au moyen d'une autre biellette 8 articulée sur la manivelle 7 selon un axe X8 d'articulation et articulée sur une corne de la jambe 2 selon un axe X9 d'articulation. Tous les axes X1 à X9 sont ici parallèles entre eux.

Dans la position illustrée à la figure 4, dans laquelle la jambe 2 est en position déployée, la position angulaire relative de la biellette 6a et de la manivelle 7 est telle que les biellettes 6a, 6b sont dans une position sensiblement alignée, dite premier alignement. De façon connue en soi, le premier alignement est une position obtenue en faisant passer les biellettes 6a, 6b légèrement au-delà de leur alignement géométrique (qui est défini par l'alignement parfait des axes X5, X6 et X7 dans un même plan) pour les faire venir sur des butées respectives. Les biellettes 6a, 6b forment ainsi un organe de stabilisation 6 permettant de maintenir les bielles 4a, 4b de l'organe de contreventement 4 en position sensiblement alignée, et donc stabiliser la jambe 2 en position déployée.

Or, l'arbre est bloqué par la manivelle 7, elle-même bloquée en rotation par son attelage à la jambe 2 via la biellette 8 qui n'est pas alignée avec la manivelle 7.

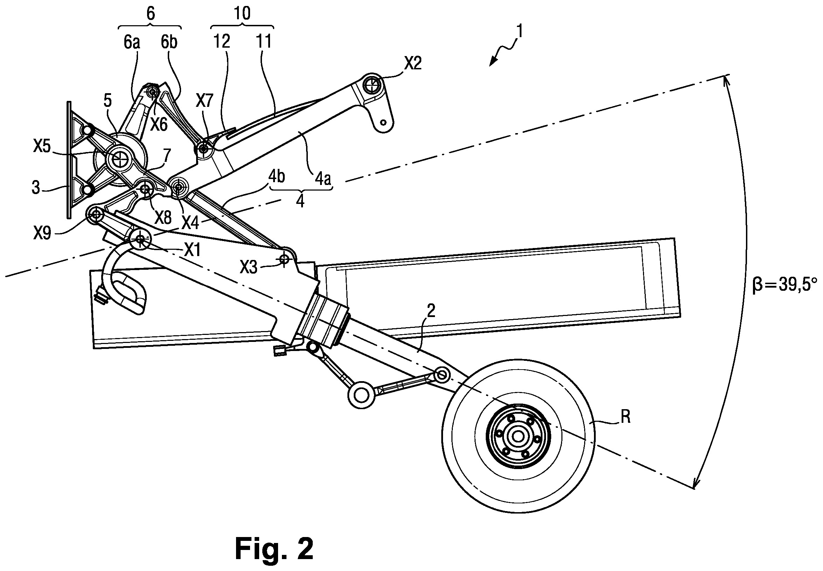

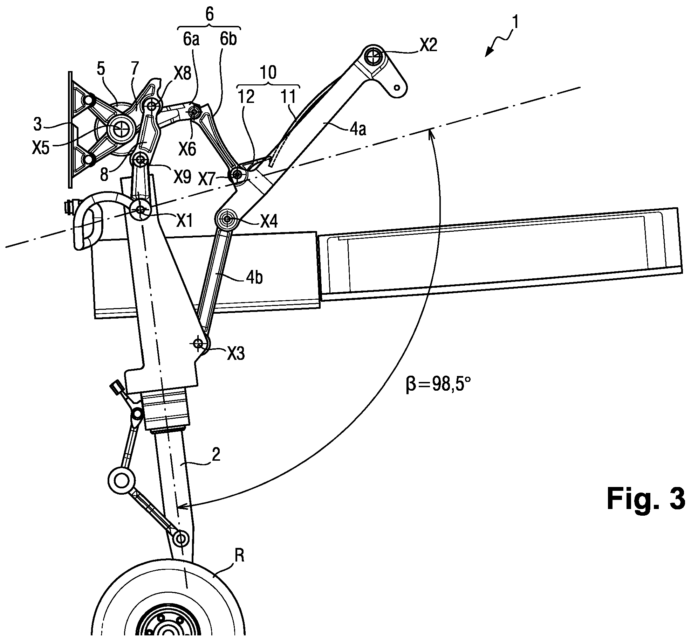

Pour relever la jambe 2 vers la position rétractée, l'actionneur 5 est alimenté pour faire tourner l'arbre et donc modifier la position angulaire relative de la biellette 6a et de la manivelle 7. Comme illustré aux figures 2 et 3, cette rotation a pour premier effet de briser l'alignement des biellettes 6a, 6b de l'organe de stabilisation 6, et donc de briser l'alignement des bielles 4a, 4b de l'organe de contreventement 4. La jambe 2 n'est donc plus stabilisée en position déployée et peut être relevée vers la position rétractée. L'actionneur 5 continuant à être alimenté, la deuxième biellette 6b tire sur la bielle 4a tandis que la biellette 8 pousse sur la jambe 2, ce qui a pour effet de faire remonter ladite jambe 2 vers la position rétractée illustrée à la figure 1.

Lorsque la jambe 2 est en position rétractée, la position angulaire relative de la biellette 6a et de la manivelle 7 est telle que la manivelle 7 et la biellette 8 sont dans une position sensiblement alignée, dite deuxième alignement. De la même façon que pour le premier alignement, le deuxième alignement est une position obtenue en faisant passer la manivelle 7 et la biellette 8 légèrement au-delà de leur alignement géométrique (qui est défini par l'alignement parfait des axes X5, X8 et X9 dans un même plan) pour les faire venir sur des butées respectives. Cet alignement bloque la jambe 2 en position rétractée de sorte que cette position est stable et ne nécessite pas l'utilisation d'un boîtier d'accrochage.

Selon l'invention, les biellettes 6a, 6b sont maintenues en position sensiblement alignée par un organe de verrouillage 10 rappelant les biellettes 6a, 6b vers la position verrouillée illustrée à la figure 4 et définie par les butées respectives desdites biellettes 6a, 6b.

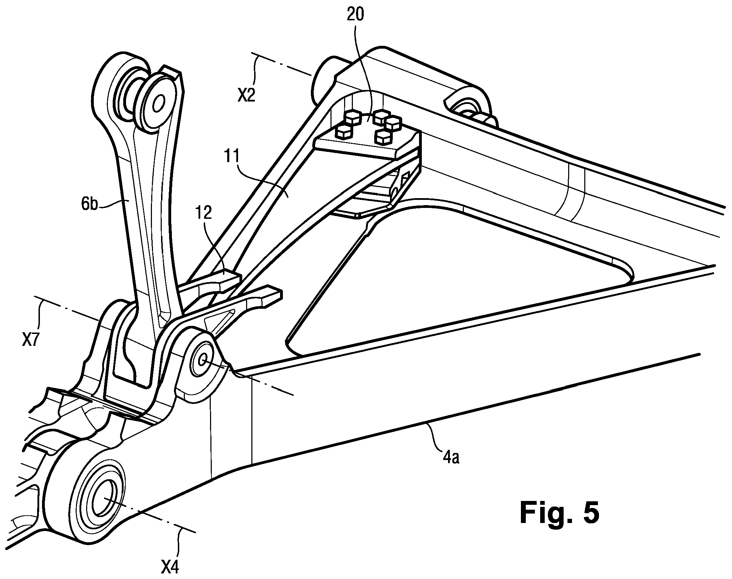

L'organe de verrouillage 10 comprend un ressort pour maintenir élastiquement les biellettes 6a, 6b en position sensiblement alignée. Le ressort comprend une lame 11 métallique de forme allongée qui s'étend le long de la bielle 4a (figure 5). La lame 11 présente ici une épaisseur globalement constante et une largeur évolutive, la largeur s'étendant sensiblement selon les axes X1-X9 et étant supérieure à l'épaisseur. La largeur de la lame 11 évolue globalement de manière linéaire de façon à homogénéiser les contraintes mécaniques subies par la lame 11 lorsque celle-ci est soumise à l'effort de flexion P décrit plus loin. La lame 11 comprend ainsi une première extrémité 11.1 de grande largeur et une deuxième extrémité 11.2 de petite largeur. La première extrémité 11.1 est fixée rigidement (liaison de type encastrement) à la bielle 4a à proximité de l'axe X2 d'articulation. La deuxième extrémité 11.2 porte un patin 11.3 disposé à proximité de l'axe X7 d'articulation.

L'organe de verrouillage 10 comprend en outre un basculeur 12 monté libre en rotation autour de l'axe X7 d'articulation de l'organe de contreventement 4. Le basculeur 12 est sensiblement en forme de L et comporte un premier bras 12.1 dont une extrémité est en appui permanent contre le patin 11.3 de la lame 11, et un deuxième bras 12.2 dont une extrémité est en appui contre une surface S4 de la bielle 4a et/ou une surface S6 de la biellette 6b suivant la position angulaire relative de la bielle 4a et de la biellette 6b (figure 1).

Le déploiement de la jambe 2 va être maintenant détaillé.

Lorsque l'atterrisseur 1 est entre la position rétractée illustrée à la figure 1 (dans laquelle la jambe 2 décrit un angle d'extension β égal à 0°) et la première position intermédiaire illustrée à la figure 2 (dans laquelle l'angle d'extension β de la jambe 2 est sensiblement égal à 39,5°), la position angulaire relative de la bielle 4a et de la biellette 6b est telle que le premier bras 12.1 du basculeur 12 est en appui contre le patin 11.3 de la lame 11 tandis que le deuxième bras 12.2 du basculeur 12 est uniquement en appui contre la surface S4 de la bielle 4a, de sorte que le basculeur 12 et la bielle 4a ont un mouvement de rotation solidaire autour de l'axe X7, la lame 11 étant légèrement fléchie et présentant une flèche F minimale.

Lorsque l'atterrisseur 1 est dans la première position intermédiaire (figure 2), la position angulaire relative de la bielle 4a et de la biellette 6b est telle que le premier bras 12.1 du basculeur 12 est en appui contre le patin 11.3 de la lame 11 tandis que le deuxième bras 12.2 du basculeur 12 est en appui à la fois contre la surface S4 de la bielle 4a et contre la surface S6 de la biellette 6b, de sorte que la flèche F de la lame 11 reste inchangée et est toujours minimale.

Lorsque l'atterrisseur 1 est entre la première position intermédiaire (figure 2) et la deuxième position intermédiaire illustrée à la figure 3 (dans laquelle l'angle d'extension β de la jambe 2 est sensiblement égal à 98.5°), la position angulaire relative de la bielle 4a et de la biellette 6b est telle que le premier bras 12.1 du basculeur 12 est en appui contre le patin 11.3 de la lame 11 tandis que le deuxième bras 12.2 du basculeur 12 est uniquement en appui contre la surface S6 de la biellette 6b, de sorte que le basculeur 12 et la biellette 6b ont un mouvement de rotation solidaire autour de l'axe X7, le basculeur 12 exerçant alors sur la lame 11 un effort de flexion P tendant à augmenter au fur et à mesure que l'atterrisseur 1 se rapproche de la deuxième position intermédiaire, et donc à entraîner une augmentation de la flèche F de la lame 11.

Lorsque l'atterrisseur 1 est dans la deuxième position intermédiaire (figure 3), l'effort de flexion P exercé par le premier bras 12.1 du basculeur 12 sur la lame 11 est maximal, de sorte que la flèche F de la lame 11 est maximale.

Lorsque l'atterrisseur 1 est entre la deuxième position intermédiaire (figure 3) et la position déployée illustrée à la figure 4 (dans laquelle l'angle d'extension β de la jambe 2 est sensiblement égal à 103.5°), la position angulaire relative de la bielle 4a et de la biellette 6b est telle que le premier bras 12.1 du basculeur 12 est en appui contre le patin 11.3 de la lame 11 tandis que le deuxième bras 12.2 du basculeur 12 est toujours uniquement appui contre la surface S6 de la biellette 6b, de sorte que le basculeur 12 et la biellette 6b continuent d'avoir un mouvement de rotation solidaire autour de l'axe X7, ce qui tend à diminuer l'effort de flexion P exercé par le premier bras 12.1 du basculeur 12 sur la lame 11 au fur et à mesure que l'atterrisseur 1 se rapproche de la position déployée, et donc à entraîner une diminution de la flèche F de la lame 11 qui tend à rappeler les biellettes 6a, 6b vers la position verrouillée.

Ainsi, la lame 11 travaille élastiquement en flexion et a tendance à revenir vers son état de repos. A cet effet, la lame 11 est légèrement fléchie lorsque les biellettes 6a, 6b sont en position sensiblement alignée (figure 4), et prend une forme plus arquée lorsque la biellette 6b pivote autour de l'axe X7 (figure 3).

La lame 11 forme ainsi un ressort à lame soumis élastiquement à un effort de flexion P via le basculeur 12 lorsque les biellettes 6a, 6b quittent leur position sensiblement alignée. L'agencement du basculeur 12 permet de lier temporairement l'effort de flexion P exercé sur la lame 11 à la rotation la biellette 6b, et donc de limiter l'effort à fournir par l'actionneur 5 lors de la rétractation de la jambe 2.

L'actionneur 5 est dimensionné pour briser l'alignement des biellettes 6a, 6b en contrant l'effort de flexion P exercé par le basculeur 12 sur la lame 11. Le désalignement des biellettes 6a, 6b provoque le désalignement des bielles 4a, 4b et donc le pivotement de la jambe 2 vers la position rétractée.

On notera que quelle que soit la position de l'atterrisseur 1, la lame 11 est maintenue par le basculeur 12 dans un état au moins de déformation minimale de manière à assurer un contact permanent entre la lame 11 et ledit basculeur 12 et ainsi éviter tout décollement dû aux vibrations pendant le vol.

On notera également que le volume occupé par la lame 11 et le basculeur 12 lorsque l'atterrisseur 1 est en position déployée est contenu dans le volume balayé par la bielle 4a lorsque l'atterrisseur 1 passe de la position rétractée à la position déployée. Un tel organe de verrouillage 10 n'impacte donc pas, contrairement à des ressorts hélicoïdaux, l'intégration d'autres équipements et s'avère particulièrement protégé des agressions extérieures, la lame 11 et le basculeur 12 étant agencés dans la case de rangement de l'atterrisseur 1 et la bielle 4a faisant office de bouclier contre les trajectoires d'oiseaux et les projections de débris de pneu (figure 5).

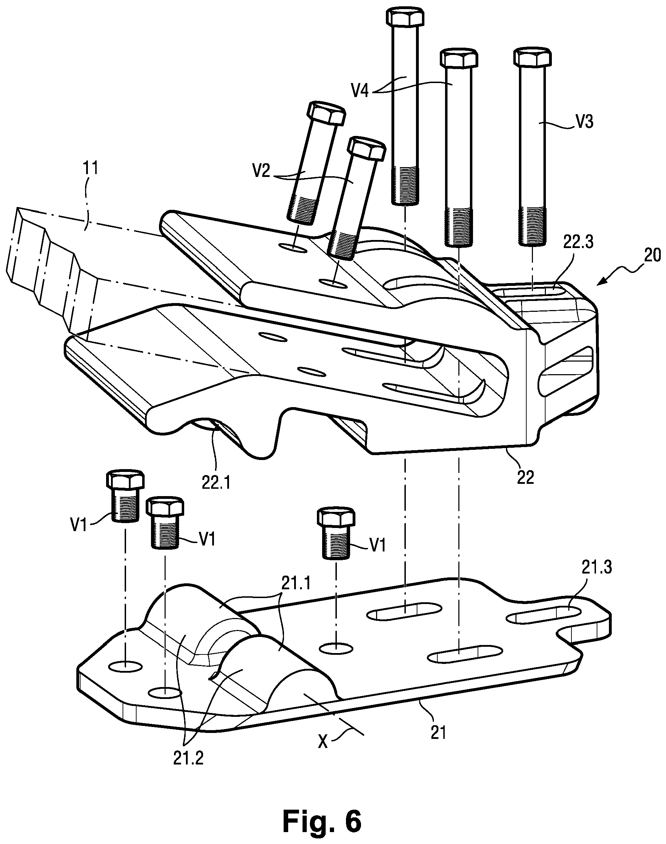

La figure 6 illustre un dispositif 20 de fixation de la lame 11 sur la bielle 4a permettant de faciliter la dépose et le remplacement de la lame 11 montée précontrainte sur la bielle 4a par le basculeur 12. Le dispositif 20 est également visible en service à la figure 5.

Le dispositif 20 comprend une semelle 21 globalement plate et agencée pour être fixée sur la première bielle 4a via trois vis V1. La semelle 21 comporte en partie avant une surface de contact mâle 21.1 formée par deux demi-cylindres 21.2 s'étendant en saillie d'une surface supérieure de la semelle 21. Les deux demi-cylindres 21.2 s'étendent selon un même axe X qui, en service, est sensiblement perpendiculaire à l'axe longitudinal de la lame 11.

Le dispositif 20 comprend en outre un support de lame 22 globalement en forme de U pour recevoir l'extrémité 11.1 de la lame 11 et être fixée à la lame 11 via deux vis V2. Le support de lame 22 comporte en partie avant une surface de contact femelle 22.1 de forme arrondie agencée pour coopérer avec la surface de contact mâle 21.1 de la semelle 21 et permettre un pivotement du support de lame 22 sur la semelle 21 sensiblement autour de l'axe X.

La semelle 21 et le support de lame 22 comportent en partie arrière un trou oblong 21.3, 22.3 agencé pour être traversés par une même vis V3 afin de fixer le support de lame 22, et donc la lame 11, à la bielle 4a et permettre un pivotement autour de l'axe X du support de lame 22 sur la semelle 21 lors du vissage et du dévissage de la vis V3.

La vis V3 a une longueur suffisante pour qu'au cours de son dévissage, le support de lame 22 pivote autour de l'axe X sous l'effet de l'effort de flexion P exercé par le basculeur 12 sur l'extrémité 11.2 de la lame 11, et cela jusqu'à ce que la lame 11 ait retrouvée son état de repos. A l'inverse, la vis V3 permet, lors de son vissage, de générer et régler l'effort de flexion P exercé par le basculeur 12 sur l'extrémité 11.2 de la lame 11 pour précontraindre ladite lame 11. Une fois la vis V3 correctement serrée, deux autres vis V4 traversant des trous oblongs ménagés dans le dispositif 20 et la lame 11 sont ajoutées, ce qui fournit une redondance de la fixation de la lame 11 en cas de défaillance d'une des vis V3, V4.

Le démontage et le remplacement de la lame 11 ne nécessite ainsi pas l'utilisation d'outils spécifique.

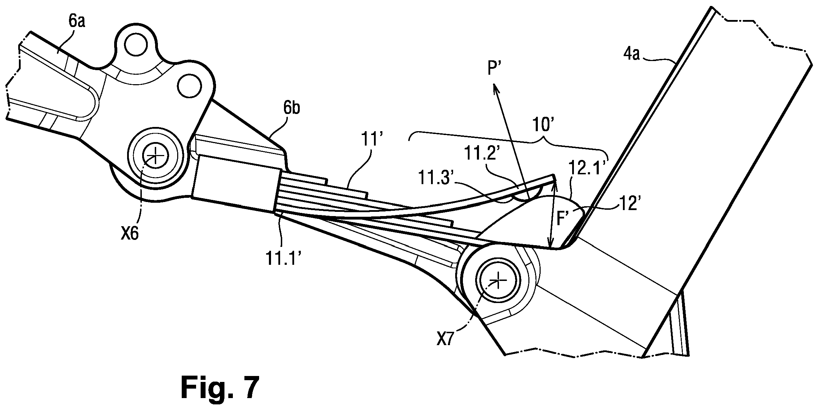

La figure 7 illustre un autre mode de réalisation de l'invention dans lequel l'atterrisseur 1 comprend, en lieu et place de l'organe de verrouillage 10, un organe de verrouillage 10' pour maintenir les biellettes 6a, 6b en position sensiblement alignée.

L'organe de verrouillage 10' comprend un ressort de forme allongée comportant une pluralité de lames 11' superposées s'étendant le long de la biellette 6b. Les lames 11' présentent une largeur globalement constante et ont des longueurs différentes de façon à homogénéiser les contraintes mécaniques subies par les lames 11' lorsque celles-ci sont soumises à l'effort de flexion P' décrit plus loin. Une première extrémité 11.1' du ressort est fixée rigidement à la biellette 6b à proximité de l'axe X6 d'articulation et une deuxième extrémité 11.2' opposée à la première extrémité 11.1' porte un patin 11.3' disposé à proximité de l'axe X7 d'articulation.

L'organe de verrouillage 10' comprend en outre une came 12' fixée à la bielle 4a de manière à ce que la came 12' et ladite bielle 4a aient un mouvement de rotation solidaire autour de l'axe X7 d'articulation de l'organe de contreventement 4. La came 12' a un profil de glissement 12.1' contre lequel la patin 11.3' est en appui permanent.

Le déploiement de la jambe 2 va être maintenant détaillé.

Lorsque l'atterrisseur 1 est entre la position rétractée (figure 1) et la première position intermédiaire (figure 2), le profil de glissement 12.1' de la came 12' est tel que la distance séparant le patin 11.3' de l'axe X7 d'articulation est minimale, de sorte que les lames 11' sont légèrement fléchies et présentent une flèche F' minimale.

Lorsque l'atterrisseur 1 est entre la première position intermédiaire (figure 2) et la deuxième position intermédiaire (figure 3), le profil de glissement 12.1' de la came 12' est tel que la distance séparant le patin 11.3' de l'axe X7 d'articulation tend à augmenter au fur et à mesure que l'atterrisseur 1 se rapproche de la deuxième position intermédiaire, et donc à entraîner une augmentation de la flèche F' des lames 11'.

Lorsque l'atterrisseur 1 est dans la deuxième position intermédiaire (figure 3), l'effort de flexion P' exercé par la came 12' sur les lames 11' est maximal, de sorte que la flèche F' des lames 11' est maximale.

Lorsque l'atterrisseur 1 est entre la deuxième position intermédiaire (figure 3) et la position déployée (figure 4), le profil de glissement 12.1' de la came 12' est tel que la distance séparant le patin 11.3' de l'axe X7 d'articulation tend à diminuer au fur et à mesure que l'atterrisseur 1 se rapproche de la position déployée, et donc à entraîner une diminution de la flèche F' des lames 11' qui tend à rappeler les biellettes 6a, 6b vers la position verrouillée.

Ainsi, les lames 11' travaillent élastiquement en flexion et ont tendance à revenir à leur état de repos. A cet effet, les lames 11' sont légèrement fléchies lorsque les biellettes 6a, 6b sont en position sensiblement alignée, et prennent une forme plus arquée lorsque la biellette 6b pivote autour de l'axe X7.

Les lames 11' forment ainsi un ressort à lames soumis élastiquement à un effort de flexion P' via la came 12' lorsque les biellettes 6a, 6b quittent leur position sensiblement alignée. L'agencement de la came 12' permet de lier temporairement l'effort de flexion P' exercé par la came 12' sur les lames 11' à la rotation la biellette 6b, et donc de limiter l'effort à fournir par l'actionneur 5 lors de la rétractation de la jambe 2.

L'actionneur 5 est dimensionné pour briser l'alignement des biellettes 6a, 6b en contrant l'effort de flexion P' exercé par la came 12' sur les lames 11'. Le désalignement des biellettes 6a, 6b provoque le désalignement des bielles 4a, 4b et donc le pivotement de la jambe 2 vers la position rétractée.

On notera que quelle que soit la position de l'atterrisseur 1, les lames 11' sont soumises à un effort de flexion P' exercé par la came 12' de manière à assurer un contact permanent entre les lames 11' et ladite came 12' et ainsi éviter tout décollement dû aux vibrations pendant le vol.

On notera également que le volume balayé par les lames 11' et la came 12' lorsque l'atterrisseur 1 passe de la position rétractée à la position déployée est contenu dans le volume balayé par la biellette 6b dans les mêmes conditions. Un tel organe de verrouillage 10' n'impacte donc pas l'intégration d'autres équipements et s'avère particulièrement protégé des agressions extérieures, les lames 11' et la came 12' étant agencés dans la case de rangement de l'atterrisseur 1 et la biellette 6b faisant office de bouclier contre les trajectoires d'oiseaux et les projections de débris de pneu.

Les lames 11' seront par exemple fixées à la biellette 6b par un dispositif de fixation similaire au dispositif de fixation 20 afin de faciliter la dépose et le remplacement des lames 11' montées précontraintes sur la biellette 6b par la came 12' et en utilisant uniquement de l'outillage standard.

Bien entendu, l'invention n'est pas limitée au mode de réalisation décrit mais englobe toute variante entrant dans le champ de l'invention telle que définie par les revendications.

Le nombre, la forme et les dimensions des lames 11, 11' peuvent être différents de ceux illustrés. Par exemple, une deuxième lame identique à la lame 11 pourra être fixée sur la bielle 4a symétriquement à la lame 11 et être en contact permanent avec le basculeur 12 pour fournir une redondance en cas de défaillance de l'une des deux lames. Par exemple encore, la lame 11 pourra avoir une largeur constante et/ou une épaisseur évolutive en présentant, par exemple encore, un profil parabolique.

Bien qu'ici la lame 11 s'étende le long de la bielle 4a, elle peut aussi s'étendre le long de la biellette 6b.

Bien qu'ici les lames 11' s'étendent le long de la biellette 6b, elle peut aussi s'étendre le long de la bielle 4a.

La stabilisation de la jambe 2 peut également cumuler l'action du basculeur 12 et d'une ou plusieurs lames 11 fixées sur la bielle 4a avec celle de la came 12' et d'une ou plusieurs lames 11' fixées sur la biellette 6b.

Les lames 11, 11' peuvent être réalisées en tout matériau approprié (métal, composite...).

Les lames 11, 11' peuvent être fixées sur la bielle 4a et la biellette 6b par tout moyen approprié.

Bien que la jambe 2 soit ici maintenue dans la position déployée par un unique organe de contreventement 4, l'invention peut également s'appliquer également aux atterrisseurs comprenant une jambe maintenue en position déployée par plusieurs organes de contreventement. Au moins l'un des organes de contreventement est alors équipée d'un organe de verrouillage 10, 10' comprenant au moins un ressort à lame.

Le pivotement du support de lame 22 sur la semelle 21 peut aussi être assuré par une surface de contact femelle portée par la semelle et une surface de contact mâle portée par le support de lame.

## Revendications

1. Atterrisseur (1) pour un aéronef comprenant :
- une jambe (2) agencée pour être montée mobile sur une structure (3) de l'aéronef entre une position déployée et une position rétractée ;
- au moins un organe de contreventement (4) pour maintenir la jambe dans la position déployée, comportant une première bielle (4a) configurée pour être articulée sur la structure de l'aéronef et une deuxième bielle (4b) articulée sur la première bielle et sur la jambe ;
- un organe de stabilisation (6) pour maintenir les première et deuxième bielles (4a, 4b) en position alignée, comportant une première biellette (6a) et une deuxième biellette (6b) articulées entre elles, et dont la deuxième biellette est articulée sur la première bielle ; et
- au moins un ressort pour rappeler élastiquement en position généralement alignée les articulations des première et deuxième biellettes ;
où le ressort est un ressort à lame (11, 11') agencé pour être amené vers un état élastiquement déformé sous un effort de flexion (P, P') lorsque les articulations des première et deuxième biellettes quittent leur position généralement alignée, **caractérisé en ce que** le ressort est agencé pour échapper à l'effort de flexion et être dans un même état de moindre déformation lorsque la jambe est entre la position rétractée et une position intermédiaire comprise entre la position rétractée et la position déployée.

2. Atterrisseur (1) selon la revendication 1, dans lequel le ressort à lame (11) a une extrémité (11.1) fixée rigidement à la première bielle (4a), et une extrémité opposée (11.2) en appui permanent sur un premier bras (12.1) d'un basculeur (12) monté libre en rotation autour de l'axe (X7) d'articulation de la première bielle (4a) et de la deuxième biellette (6b), le basculeur étant lié en rotation à la première bielle (4a) lorsque la jambe est entre la position rétractée et la position intermédiaire, et lié en rotation à la deuxième biellette (6b) lorsque la jambe (2) est entre la position intermédiaire et la position déployée.

3. Atterrisseur (1) selon la revendication 2, dans lequel le basculeur (12) a un deuxième bras (12.2) en appui contre une surface (S4) de la première bielle lorsque la jambe (2) est entre la position rétractée et la position intermédiaire, et en appui contre une surface (S6) de la deuxième biellette lorsque la jambe (2) est entre la position intermédiaire et la position déployée.

4. Atterrisseur (1) selon la revendication 2 ou 3, dans lequel le ressort à lame (11) est une plaque de métal ayant une épaisseur sensiblement constante et une largeur évoluant de manière globalement linéaire.

5. Atterrisseur (1) selon l'une quelconque des revendications 2 à 4, dans lequel l'extrémité du ressort à lame (11) est fixée rigidement à la première bielle (4a) via un dispositif de fixation (20) comprenant une semelle (21) fixée sur la première bielle (4a) et un support de lame (22) fixé à l'extrémité du ressort à lame (11), le support de lame (22) comportant en partie avant une surface de contact agencée pour coopérer avec une surface de contact de la semelle et permettre un pivotement dudit support de lame sur ladite semelle autour d'un axe (X) sensiblement perpendiculaire à un axe longitudinal du ressort à lame (11), et comportant en partie arrière un trou oblong agencé pour être traversé par une vis (V3) afin de fixer rigidement le support de lame à la première bielle et permettre le pivotement dudit support de lame lors du vissage et du dévissage de la vis.

6. Atterrisseur (1) selon l'une quelconque des revendications 2 à 5, dans lequel le volume occupé par le ressort à lame (11) et le basculeur (12) lorsque jambe (2) est en position déployée est contenu dans le volume balayé par la première bielle (4a) lorsque la jambe (2) passe de la position rétractée à la position déployée.

7. Atterrisseur (1) selon la revendication 1, dans lequel le ressort à lame (11') a une extrémité (11.1') fixée rigidement à la deuxième biellette (6b), et une extrémité opposée (11.2') en appui permanent contre un profil de glissement (12.1') d'une came (12') fixée à la première bielle (4a) de manière à ce que la came et ladite première bielle aient un mouvement de rotation solidaire autour de l'axe (X7) d'articulation de la première bielle (4a) et de la deuxième biellette (6b).

8. Atterrisseur (1) selon la revendication 7, dans lequel le ressort à lame (11') comporte une pluralité de lames superposées ayant une largeur globalement constante et des longueurs différentes.

9. Atterrisseur (1) selon l'une quelconque des revendications précédentes, comprenant deux ressorts à lame (11, 11') pour fournir une redondance en cas de défaillance de l'un des deux ressorts à lame.

10. Atterrisseur (1) selon la revendication 9, dans lequel les deux ressorts à lames (11, 11') sont sensiblement identiques.

11. Aéronef comprenant au moins un atterrisseur (1) selon l'une quelconque des revendications précédentes.

## Patentansprüche

1. Fahrwerk (1) für ein Luftfahrzeug, umfassend:
- ein Bein (2), das dafür ausgelegt ist, an einer Struktur (3) des Luftfahrzeugs zwischen einer ausgefahrenen Stellung und einer eingezogenen Stellung beweglich montiert zu werden;
- zumindest ein Windverstrebungsorgan (4) zum Halten des Beins in der ausgefahrenen Stellung, enthaltend eine erste Strebe (4a), die dafür ausgebildet ist, an der Luftfahrzeugstruktur angelenkt zu werden, und eine zweite Strebe (4b), die an der ersten Strebe und an dem Bein angelenkt ist;
- ein Stabilisierungsorgan (6) zum Halten der ersten und der zweiten Strebe (4a, 4b) in einer miteinander ausgerichteten Position, enthaltend einen ersten Schenkel (6a) und einen zweiten Schenkel (6b), die aneinander angelenkt sind und von denen der zweite Schenkel an der ersten Strebe angelenkt ist; und
- zumindest eine Feder, die dazu dient, die Gelenke des ersten und des zweiten Schenkels elastisch in eine im Allgemeinen miteinander ausgerichtete Position zurückzustellen;
wobei es sich bei der Feder um eine Blattfeder (11, 11') handelt, die dafür ausgelegt ist, unter Einwirkung einer Biegekraft (P, P') in einen elastisch verformten Zustand gebracht zu werden, wenn die Gelenke des ersten und des zweiten Schenkels ihre im Allgemeinen miteinander ausgerichtete Position verlassen,
**dadurch gekennzeichnet, dass** die Feder dafür ausgelegt ist, der Biegekraft nicht zu unterliegen und sich unverändert im Zustand geringster Verformung zu befinden, wenn sich das Bein zwischen der eingezogenen Stellung und einer zwischen der eingezogenen Stellung und der ausgefahrenen Stellung liegenden Zwischenstellung befindet.

2. Fahrwerk (1) nach Anspruch 1, wobei die Blattfeder (11) ein starr an der ersten Strebe (4a) befestigtes Ende (11.1) sowie ein entgegengesetztes Ende (11.2) aufweist, das dauerhaft an einem ersten Arm (12.1) einer Kippvorrichtung (12) anliegt, die frei drehbar um die Gelenkachse (X7) der ersten Strebe (4a) und des zweiten Schenkels (6b) angebracht ist, wobei die Kippvorrichtung drehfest mit der ersten Strebe (4a) verbunden ist, wenn sich das Bein zwischen der eingezogenen Stellung und der Zwischenstellung befindet, und drehfest mit dem zweiten Schenkel (6b) verbunden ist, wenn sich das Bein (2) zwischen der Zwischenstellung und der ausgefahrenen Stellung befindet.

3. Fahrwerk (1) nach Anspruch 2, wobei die Kippvorrichtung (12) einen zweiten Arm (12.2) aufweist, der an einer Fläche (S4) der ersten Strebe anliegt, wenn sich das Bein (2) zwischen der eingezogenen Stellung und der Zwischenstellung befindet, und an einer Fläche (S6) des zweiten Schenkels anliegt, wenn sich das Bein (2) zwischen der Zwischenstellung und der ausgefahrenen Stellung befindet.

4. Fahrwerk (1) nach Anspruch 2 oder 3, wobei es sich bei der Blattfeder (11) um eine Metallplatte mit einer im Wesentlichen konstanten Dicke und einer sich allgemein linear entwickelnden Breite handelt.

5. Fahrwerk (1) nach einem der Ansprüche 2 bis 4, wobei das Ende der Blattfeder (11) starr an der ersten Strebe (4a) mittels einer Befestigungsvorrichtung (20) befestigt ist, die eine auf der ersten Strebe (4a) befestigte Auflageplatte (21) und einen an dem Ende der Blattfeder (11) befestigten Federhalter (22) umfasst, wobei der Federhalter (22) an dem Vorderteil eine Kontaktfläche aufweist, die dafür ausgelegt ist, mit einer Kontaktfläche der Auflageplatte zusammenzuwirken und ein Verschwenken der Auflagefläche auf der Auflageplatte um eine Achse (X) zu ermöglichen, die im Wesentlichen senkrecht zu einer Längsachse der Blattfeder (11) verläuft, und an dem Rückenteil ein Langloch aufweist, das zum Hindurchführen einer Schraube (V3) ausgelegt ist, damit der Federhalter starr an der ersten Strebe befestigt wird und so bei dem Ein- und Ausschrauben der Schraube das Verschwenken des Federhalters ermöglicht wird.

6. Fahrwerk (1) nach einem der Ansprüche 2 bis 5, wobei das von der Blattfeder (11) und der Kippvorrichtung (12) eingenommene Volumen in der ausgefahrenen Stellung des Beins (2) in dem Volumen enthalten ist, das von der ersten Strebe (4a) überstrichen wird, wenn das Bein (2) aus der eingezogenen Stellung in die ausgefahrene Stellung geführt wird.

7. Fahrwerk (1) nach Anspruch 1, wobei die Blattfeder (11') ein starr an dem zweiten Schenkel (6b) befestigtes Ende (11.1') sowie ein entgegengesetztes Ende (11.2') aufweist, das dauerhaft an einem Gleitprofil (12.1') eines Nockens (12') anliegt, der derart an der ersten Strebe (4a) befestigt ist, dass der Nocken und die erste Strebe eine gemeinsame Drehbewegung um die Gelenkachse (X7) der ersten Strebe (4a) und des zweiten Schenkels (6b) ausführen.

8. Fahrwerk (1) nach Anspruch 7, wobei die Blattfeder (11') eine Mehrzahl von übereinanderliegenden Blättern mit einer allgemein konstanten Breite und unterschiedlichen Längen enthält.

9. Fahrwerk (1) nach einem der vorhergehenden Ansprüche, umfassend zwei Blattfedern (11, 11'), damit bei Ausfall einer der beiden Blattfedern eine Redundanz gewährleistet ist.

10. Fahrwerk (1) nach Anspruch 9, wobei beide Blattfedern (11, 11') im Wesentlichen identisch sind.

11. Luftfahrzeug, umfassend zumindest ein Fahrwerk (1) nach einem der vorhergehenden Ansprüche.

## Claims

1. Landing gear (1) for an aircraft, comprising:
. a strut (2) arranged to be mounted on an aircraft structure (3) so as to move between an extended position and a retracted position;
. at least one bracing member (4) to hold the strut in the extended position, comprising a first connecting rod (4a) configured to be hinged on the structure of the aircraft and a second connecting rod (4b) hinged on the first connecting rod and on the strut;
. a stabilising member (6) to hold the first and second connecting rods (4a, 4b) in the aligned position, comprising a first link rod (6a) and a second link rod (6b) hinged together, and the second link rod of which is hinged on the first connecting rod; and
. at least one spring to resiliently return the hinges of the first and second link rods into the generally aligned positions;
wherein the spring is a leaf spring (11, 11') arranged to be brought into a resiliently deformed state under a bending force (P, P') when the hinges of the first and second link rods move from their generally aligned position, **characterised in that** the spring is arranged to avoid being subjected to the bending force and be in one same state of lesser deformation when the strut is between the retracted position and an intermediate position comprised between the retracted position and the extended position.

2. Landing gear (1) according to claim 1, wherein the leaf spring (11) has an end (11.1) rigidly fixed to the first connecting rod (4a), and an opposite end (11.2) permanently bearing on a first arm (12.1) of a pivoting arm (12) mounted rotatably free about the hinge axis (X7) of the first connecting rod (4a) and of the second link rod (6b), the pivoting arm being rotatably linked to the first connecting rod (4a) when the strut is between the retracted position and the intermediate position, and rotatably linked to the second link rod (6b) when the strut (2) is between the intermediate position and the extended position.

3. Landing gear (1) according to claim 2, wherein the pivoting arm (12) has a second arm (12.2) bearing against a surface (S4) of the first connecting arm when the strut (2) is between the retracted position and the intermediate position, and bearing against a surface (S6) of the second link rod when the strut (2) is between the intermediate position and the extended position.

4. Landing gear (1) according to claim 2 or 3, wherein the leaf spring (11) is a metal plate having a substantially constant thickness and a width developing mainly linearly.

5. Landing gear (1) according to any one of claims 2 to 4, wherein the end of the leaf spring (11) is rigidly fixed to the first connecting rod (4a) via a fixing device (20) comprising a base (21) fixed onto the first connecting rod (4a) and a blade support (22) fixed to the end of the leaf spring (11), the blade support (22) comprising, in the front part, a contact surface arranged to engage with a contact surface of the base and enable a pivoting of said blade support on said base about an axis (X) substantially perpendicular to a longitudinal axis of the leaf spring (11), and comprising, in the rear part, an oblong hole arranged to be passed through by a screw (V3) in order to rigidly fix the blade support to the first connecting rod and enable the pivoting of said blade support during the screwing and the unscrewing of the screw.

6. Landing gear (1) according to any one of claims 2 to 5, wherein the volume occupied by the leaf spring (11) and the pivoting arm (12) when the strut (2) is in the extended position is contained in the volume swept by the first connecting rod (4a) when the strut (2) passes from the retracted position to the extended position.

7. Landing gear (1) according to claim 1, wherein the leaf spring (11') has an end (11.1') rigidly fixed to the second link rod (6b), and an opposite end (11.2') permanently bearing against a sliding profile (12.1') of a cam (12') fixed to the first connecting rod (4a) such that the cam and said first connecting rod have an integral rotation movement about the hinge axis (X7) of the first connecting rod (4a) and of the second link rod (6b).

8. Landing gear (1) according to claim 7, wherein the leaf spring (11') comprises a plurality of superposed blades having a mainly constant width and different lengths.

9. Landing gear (1) according to any one of the preceding claims, comprising two leaf springs (11, 11') to provide a redundancy in case of failure of one of the two leaf springs.

10. Landing gear (1) according to claim 9, wherein the two leaf springs (11, 11') are substantially identical.

11. Aircraft comprising at least one landing gear (1) according to any one of the preceding claims.
